# EUROPÄISCHE PATENTSCHRIFT

(11) **EP 2 423 622 B1**
(45) Veröffentlichungstag und Bekanntmachung des Hinweises auf die Patenterteilung: **23.08.2017**
(21) Anmeldenummer: 11177666.2
(22) Anmeldetag: 16.08.2011
(51) Int. Cl.: F24J 2/52

(54) **Befestigungsvorrichtung mit Haltern und Tragschiene**
Fixing device with mounting elements and supporting rail
Dispositif de fixation avec éléments de montage et rail de support

(30) Priorität: 27.08.2010 DE 202010008389 U; 25.01.2011 DE 202011000172 U
(43) Veröffentlichungstag der Anmeldung: 29.02.2012
(73) Patentinhaber: IBC Solar AG, 96231 Bad Staffelstein (DE)
(72) Erfinder: Ullrich, Andreas, 96117 Memmelsdorf (DE); Zipf, Tobias, 97244 Bütthard (DE); Fotak, Kristijan, 97261 Güntersleben (DE); Geier, Sebastian, 96524 Neuhaus-Schierschnitz (DE)
(74) Vertreter: Pröll, Jürgen

(56) Entgegenhaltungen:
- EP-A2- 2 410 260
- WO-A1-00/40823
- DE-A1- 10 336 019
- DE-U1-202005 003 717
- DE-U1-202007 016 011
- DE-U1-202009 001 810

## Beschreibung

Die Erfindung betrifft eine Befestigungsvorrichtung umfassend eine Tragschiene und U-förmige Halter, insbesondere für Solarmodule oder Solarkollektoren oder Photovoltaikmodule mit den im Oberbegriff der Ansprüche 1, 2 angegebenen Merkmalen. Aus der DE 20 2009 001 810 U1 ist eine Befestigungsvorrichtung für eine Tragschiene für ein Solarmodul bekannt, die beidseitig zumindest bereichsweise jeweils einen Befestigungssteg aufweist, der in ein Haltemittel zum Befestigen der Tragschiene einsetzbar ist. Das Haltemittel weist einen, im Querschnitt gesehen, im Wesentlichen U-förmigen Halter mit einem Grundstück und zwei Schenkeln auf, die an den Innenseiten vorzugsweise einander gegenüberliegende Aufnahmenuten für die Befestigungsstege aufweisen. Eine der Aufnahmenuten weist eine Höhe auf, die der Dicke des zugehörigen Befestigungssteges zu dessen im Wesentlichen spielfreien Aufnahme entspricht. Die andere zweite Aufnahmenut besitzt eine Höhe, die derart größer als die Dicke des zugehörigen Befestigungssteges ist, dass bei aufgenommenem Befestigungssteg der Halter gegenüber der Tragschiene verkippbar ist. Der Abstand zwischen dem Nutgrund und der zweiten Aufnahmenut und der Innenseite des gegenüberliegenden Schenkels ist größer als die Breite der Tragschiene im Bereich des Befestigungssteges. Weiterhin ist der Abstand zwischen dem Nutgrund der ersten Aufnahmenut und der Innenseite des gegenüberliegenden Schenkels kleiner als die Breite der Tragschiene im Bereich der Befestigungsstege.

Zur Montage der Tragschiene wird zunächst der Halter an einem Gegenstand, beispielsweise an einem Trapezblech eines Daches, befestigt. Dazu werden zwei vorzugsweise selbstbohrende Schrauben als Befestigungsmittel in die Durchgangsöffnungen des Halters eingeführt und obenseitig in das Trapezblech eingeschraubt. Anschließend wird die Tragschiene mit dem Befestigungssteg seitlich in die zweite vergrößerte Aufnahmenut eingebracht. Die Aufnahmenut erlaubt eine verkippte bzw. gegenüber dem Basisträger des Halteelementes schräge Einführung der Tragschiene mit dem Befestigungssteg. Durch vorteilhafte Wahl der winklig ausgeführten zweiten Aufnahmenut und der Abstände lässt sich die Tragschiene einfach in die Aufnahmenut mit dem Befestigungssteg einschieben. Die Tragschiene wird soweit in die zweite Aufnahmenut eingeschoben, bis der Befestigungssteg über die Innenseite des ersten Schenkels hinausgeführt ist. Durch Niederdrücken und durch seitliches Verschieben in Richtung der ersten Aufnahmenut erfolgt eine Lagesicherung beider Befestigungsstege. Es handelt sich um eine schwimmende Befestigung. Durch seitliches Verschieben in die zweite Aufnahmenut kann die Tragschiene aus der ersten Aufnahmenut wieder herausgleiten. Wenn die Tragschiene bereits mit ihren Enden montiert ist, können weitere Halter nachträglich aufgesetzt und auf Trapezbleche aufgeschoben und zusätzlich anmontiert werden. Durch Drehung der Halter um 180° um eine vertikale Achse kann dabei ein seitliches Herausschieben der Tragschiene aus den Haltern vermieden werden. Zu diesem Zweck werden die Halter in den Zwischenhohlräumen des Trapezbleches auf die Befestigungsstege der Tragschiene aufgesetzt und auf dem vorstehenden Teil des Trapezbleches aufgeschoben und daran mittels Schrauben befestigt. Bedingt durch das seitliche Spiel der Tragschiene mit den Befestigungsstegen innerhalb des Halters müssen also gedrehte Halter zur seitlichen Lagersicherung zusätzlich montiert werden bzw. müssen zusätzliche Fixiermittel vorgesehen sein, um die Tragschiene in der montierten Position fixieren zu können.

Aus der DE 20 2005 003 717 U1 ist eine Befestigungsvorrichtung zur Befestigung eines Montageprofils für Solarmodule oder Solarkollektoren an einem Trägerprofil, insbesondere an einem Trapez- oder Sandwichprofil, bekannt, die einerseits mit dem Montageprofil und andererseits mit dem Trägerprofil verbindbar ist. Die Verbindung zwischen dem Montageprofil und der Befestigungsvorrichtung ist eine definiert spielbehaftete Verbindung, so dass über die bewegliche Aufnahme des Montageprofils eine thermische Ausdehnung ausgeglichen wird. In einer Ausgestaltung ist ein Langloch vorgesehen, durch das ein Befestigungselement zur Verbindung mit dem Montageprofil einführbar ist, wobei sich das Langloch in Richtung der relevanten thermischen Ausdehnung des Montageprofils erstreckt. Die Tragschiene ist an dem Halter mit Langloch angenietet oder angeschraubt, und zwar derart, dass eine thermische Ausdehnung des Montageprofils möglich ist.

Aus der älteren EP 2 410 260 A2 ist eine Vorrichtung zum Befestigen einer Tragschiene bekannt, die beidseitig zumindest bereichsweise nach außen vorstehende Befestigungsstege zum Befestigen der Tragschiene an U-förmigen Haltern aufweist, die in den beiden aus der Ebene eines Basisträgers vorstehenden seitlichen Lagerschenkeln Aufnahmenuten aufweisen, in die die Befestigungsstege eingreifbar sind. Die Halter weisen einen Basisträger mit Bohrungen zur Schraub- und/oder Nietbefestigung an Befestigungselementen oder an anderen Fixiermitteln hierfür sowie mehrere Aufnahmenuten übereinander in den beiden Lagerschenkeln parallel verlaufend auf, mit denen die Halter in zwei Höhenpositionen auf die Befestigungsstege der Tragschiene aufschwenkbar sind. Der relative Abstand der Aufnahmenuten in den beiden Lagerschenkeln ist gleich gewählt und die Höhe der Aufnahmenuten entspricht der Dicke der Befestigungsstege.

Aus der DE 103 36 019 A1 ist eine Fassadenkonstruktion bekannt, die eine Unterkonstruktion aus vertikalen oder horizontalen Grundprofilträgern und an diesen angebrachten, kreuzenden horizontalen bzw. vertikalen Profilträgern aufweisen. An der Unterkonstruktion sind Fassadenplatten über Plattenhalter befestigt. Um eine einfach montierbare und windsichere Konstruktion zu erhalten, sind die Profilträger über spezielle Tragprofilhalter an den Grundprofilträgern befestigt, z. B. über Tragprofilhalter, die an den Grundprofilträger verschraubt sind und den Profilträger umgreifen. Der Tragprofilhalter kann Schenkel mit Sägezahnverrastung aufweisen, in die das Tragprofil mit entsprechend ausgebildeten Gegenzähnen an den Außenseiten rastend eindrückbar ist.

Ausgehend vom bekannten Stand der Technik liegt der Erfindung die Aufgabe zu Grunde, eine Befestigungsvorrichtung der gattungsgemäßen Art so auszubilden, dass Unebenheiten, insbesondere geringe Höhenunterschiede zwischen den Befestigungspunkten an den Befestigungsflächen durch den Halter selbst auf einfache Weise ausgeglichen werden können. Eine weitere Aufgabe besteht darin, eine thermische Ausdehnung der Tragschiene und eine einfache Montage sowohl der Halter an der Tragschiene als auch eine feste Montage an Befestigungsflächen zu ermöglichen, wobei die Tragschiene im Rahmen der Toleranzen nahezu spielfrei im Halter fixierbar sein soll. Die Erfindung löst die Aufgabe durch Ausgestaltung der Befestigungsvorrichtung gemäß den in den nebengeordneten Ansprüchen und 2 angegebenen technischen Lehren. Vorteilhafte Weiterbildungen der Erfindung sind in den Unteransprüchen im Detail angegeben.

Gemäß einer Lehre der Erfindung ist vorgesehen, dass mehrere Aufnahmenuten übereinander in den beiden Lagerschenkeln parallel verlaufend angeordnet sind und dass der relative Abstand der Aufnahmenuten in beiden Lagerschenkeln gleich ist und die Höhe der Aufnahmenuten der Dicke der Befestigungsstege entspricht. Dadurch ist es möglich, die Tragschiene parallel zum Basisträger in verschiedenen Höhenpositionen auf einfache Art und Weise einzubringen. An den Enden einer Tragschiene kann auf einfache Weise ein Halter der Befestigungsvorrichtung nach der Erfindung auf die seitlich vorstehenden Befestigungsstege aufgeschoben werden. Die lichte Weite ist dabei so zu bemessen, dass ein Aufschieben möglich ist. Selbstverständlich kann durch Schräghalten einer Tragschiene, wenn sie lang ist und die Führungspassungen entsprechend ausgebildet sind, der Halter auf den Befestigungsstegen entlanggleiten, um auch vom Anfang entfernt platziert werden zu können. In der Praxis werden jedoch die Tragschienen, beispielweise beim Verbauen als Träger für Solarmodule, horizontal auf einem schrägen Dach verlegt. Hier sollten die Halter so ausgebildet sein, dass sie an jeder beliebigen Stelle in der gewünschten Höhenposition zum Befestigen der Tragschiene an Trägern oder an den erhabenen Stellen von Trapezdächern montiert werden können. Die Erfindung sieht hierfür weitere vorteilhafte Ausgestaltungsmöglichkeiten vor.

Gemäß einer weiteren Lehre im Anspruch 1 sind die Lagerschenkel in Reihe hintereinander in Längsrichtung der einsetztbaren Tragschiene versetzt an dem Basisträger des U-förmigen Halters vorgesehen. Ferner ist der Abstand zwischen den beiden benachbarten Innenkanten der Lagerschenkel so groß gewählt oder die Lagerschenkel mit derart schräg und parallel zueinander verlaufenden Freischnitten versehen, dass bei Schrägstellung des Halters gegenüber der Tragschienenlängsachse um eine vertikale Achse die Tragschiene in den Zwischenraum zwischen den beiden Lagerschenkeln einführbar ist und durch entgegengesetzte Drehung die seitlichen Befestigungsstege in die Aufnahmenuten einschwenkbar sind.

Nach dem Aufsetzen des Halters auf die Tragschiene mit den seitlich vorstehenden Befestigungsstegen und nach dem Einschwenken derselben durch Drehung des Halters um eine vertikale Achse in die beiden in Längsrichtung versetzten Nuten sind die Befestigungsstege hierin gelagert oder fixiert und liegen am Nutengrund an bzw. weisen sie nur einen ganz geringen, im Toleranzbereich liegenden Abstand auf, so dass eine seitliche Verschiebung in Richtung der Längsachse des Halters nicht möglich ist. Andererseits gewährleistet ein Gleitsitz oder auch eine Einklemmung, dass auch bei thermischer Dehnung der Tragschiene diese gesichert gehalten wird und sich dennoch ausdehnen kann.

Die Halteschenkel können beispielsweise durch zwei Türme realisiert sein, von denen der eine an der einen Kante des Basisträgers des Halters an einer Längskante angebracht ist und der andere an der anderen Längskante. In diesen Türmen sind mehrere Nuten parallel oberhalb des Basisträgers eingebracht, um nach dem schrägen Einsetzen der Tragschiene zwischen den beiden Türmen durch Drehung des Halters um eine fiktive vertikale Achse ein Aufschwenken auf eine der Nuten auf den jeweiligen Befestigungssteg zu bewirken. Grundsätzlich kann ein einzelner Befestigungssteg zur Einstellung der Höhenlage, z. B. ein 3 mm oder 5 mm vorstehender Steg, bodenseitig am Tragprofil vorgesehen sein, der diese Bedingungen erfüllt. Es können aber auch zwei oder mehrere Befestigungsstege vorgesehen sein, und zwar mindestens im unteren Befestigungsbereich des Halters, die kämmend in übereinander angeordneten Nuten in den Lagerschenkeln eingreifen. Durch die mehreren übereinander angeordneten Nuten ist auf einfache Weise eine Höhenverstellung der Tragschiene relativ zum Basisträger ermöglicht, so dass hierüber Höhendifferenzen zwischen den Befestigungen einer Tragschiene an mehreren Befestigungspunkten, beispielsweise an einem Trapezdach, ausgeglichen werden können.

Die Lagerschenkel können aber auch einen ersten Bereich aufweisen, der mit Nuten versehen ist, und einen zweiten Bereich, der als Freischnitt schräg ausgebildet ist und von der Innenkante nach außen verläuft, so dass ein schräger, also fast diagonal verlaufender Kanal gegeben ist. Mit diesen Schrägflächen kann der Halter dann auf die Tragschiene mit den überstehenden Befestigungsstegen aufgesetzt und aus der Schrägstellung in eine 90°-Stellung der Längsachse des Halters in Bezug auf die Tragschienenlängsachse verdreht werden, in welcher zwangsläufig die seitlichen Befestigungsstege in die Nuten hineingedrückt werden. Im montierten Zustand verläuft also die Längsachse des Halters stets im rechten Winkel zu der Tragschiene.

Zum Anbringen des Halters der Befestigungsvorrichtung nach der Erfindung an einer Tragschiene in jeder beliebigen Position sieht die weitere Lehre im Anspruch 2 vor, dass ein Lagerschenkel am Basisträger gegenüber dem anderen Lagerschenkel relativ verschieb-, abnehm- oder versetzbar angeordnet ist und dass nach dem Einsetzen der seitlichen Befestigungsstege an der einen Seite der Tragschiene in die Aufnahmenuten in dem stationär am Basisträger befestigten Lagerschenkel in einer definierten Höhenlage der relativ verschieb-, abnehm- oder versetzbar angeordnete Lagerschenkel mit seinen Aufnahmenuten in gleicher Höhenposition auf die an der anderen Seite der Tragschiene vorhandenen seitlichen Befestigungsstege aufsetzbar und an dem Basisträger fixierbar ist.

Diese Befestigungsvorrichtung bedient sich einer modularen Lösung, bei der der Halter der Befestigungsvorrichtung zwei Lagerschenkel am Basisträger aufweist, wobei der eine Lagerschenkel stationär fest am Basisträger befestigt ist und der zweite gegenüber den Aufnahmen Flächenparallel verschiebbar angeordnet oder ansetzbar oder anfügbar ausgebildet ist, so dass zunächst der Basisträger mit dem einen Lagerschenkel auf den oder die seitlichen Befestigungsstege an der Tragschiene aufsetzbar ist, während der zweite Lagerschenkel erst danach in gleicher Höhenposition angefügt wird, wobei die seitlich vorstehenden Befestigungsstege in die Aufnahmenuten eingreifen. Bei der Montage kann beispielsweise der Basisträger mit dem stationären Lagerschenkel bei einer Tragschiene, die auf einem schrägen Dach horizontal verlegt ist, von unten auf den Befestigungssteg oder die -stege aufgeschoben werden und mittels der in der Befestigungslasche des Basisträgers eingebrachten Bohrung an dem Dach beispielsweise mittels Blindniete oder Schrauben befestigt werden. Der zweite, ansetzbare oder anfügbare Lagerschenkel kann dann von oben aufgesetzt und durch Einbringen einer Schraube oder einer Niete in die kongruente Bohrung in dem Halteschenkel des Lagerschenkels und der Lasche am Basisträger befestigt werden.

An dem Halteschenkel können auch übergreifende, U-förmige Führungen vorgesehen sein, die über Seitenansätze an den Befestigungslaschen des Basisträgers aufschiebbar sind, so dass eine Führung gegeben ist, die aber nicht zwingend notwendig ist. In einer solchen Ausführung kann auch eine Feder eingesetzt sein, gegen deren Federkraft der bewegliche Lagerschenkel nach außen abziehbar ist und durch die Federkraft automatisch auf einen Befestigungssteg mit der Aufnahmenut beim Loslassen des Lagerschenkels aufgreift. Dies hat den Vorteil, dass die Vorrichtung als Einbauteil am Montageort zur Verfügung steht und auf die Tragschiene aufgesetzt werden kann, bevor die Vorrichtung an dem Dach oder einem anderen Träger über die Bohrung befestigt wird.

Damit der bewegliche Lagerschenkel gegenüber dem Basisträger in verschiedene Stellungen verbracht werden kann, kann auch vorgesehen sein, dass der Halteschenkel an der Unterseite Fügerasten aufweist, also Erhebungen, die in Ausnehmungen an der Oberseite der Lasche an dem Basisträger in den verschiedenen Weitenstellungen gegenüber dem stationären Lagerschenkel einrasten. Für die Sicherung der Endposition kann auch eine Fügeverbindung, also eine Nut-Feder-Verbindung, in Längsrichtung der Tragschiene verlaufend vorgesehen sein, die ein Abziehen des beweglichen Lagerschenkels vom Basiselement gänzlich verhindert. Um diese Fügerasten nutzen zu können, ist in weiterer Ausgestaltung eine Bügelfeder vorgesehen, die in seitlichen Bohrungen des Basisträgers, hier insbesondere in der Lasche, auf der der Halteschenkel des beweglichen Lagerschenkels aufgreift, eingesetzt ist und mit dem Federschenkel auf den Halteschenkel greift. Die Lagerung der seitlichen Schenkel der Bügelfeder in den Bohrungen des Basisträgers müsste dabei so vorgesehen sein, dass die Bügelfeder unter Federdruck an der Oberfläche des Halteschenkels anliegt.

Die Bügelfeder kann als Brückenfeder ausgebildet sein oder auch als einzelne Schenkelfeder, die seitlich über den Halteschenkel greift. Diese Ausführung hat den Vorteil, dass der Lagerschenkel in eine Öffnungsstellung verbringbar ist, also eine größere Weite zwischen den gegenüberliegenden Nutenrippen der Lagerschenkel gegeben ist als die Breite der Außenmasse der Befestigungsstege, so dass in der Montagestellung der Halter von unten an die Tragschiene anfügbar ist. Liegt der Basisträger auf der Montagefläche auf dem Dach oder auf einem anderen Gegenstand auf, so kann die Höhe der Tragschiene nivelliert werden und es können beide Lagerschenkel auf die Befestigungsstege aufgeschoben werden. Dabei bewirkt eine Fügeraste eine zusätzliche Schiebesicherung. In herkömmlicher Weise kann dann die Befestigung über die Bohrungen in den Laschen bzw. in der Lasche und dem Haltesteg erfolgen.

In dem aufgesetzten Zustand kann dann der Halter mit der eingeführten Tragschiene über vorzugsweise an seitlichen Laschen des Basisträgers des Halters eingebrachte Bohrungen z. B. an dem Berg eines Trapezbleches eines Blechdaches oder an Haltern oder Flächenelementen angenietet oder angeschraubt werden. Damit in die Verbindungsstelle kein Wasser eindringen kann, empfiehlt es sich, an der Unterseite des Basisträgers eine Dichtungsschicht aufzubringen oder ein Klebeband und einen Blindniet, der von oben einführbar ist und den Basisträger mit dem darunter befindlichen Blech des Trapezbleches des Daches verbindet.

Die seitlichen Befestigungsstege brauchen nicht auf gleicher Höhe angeordnet zu sein. Sie brauchen auch nicht die gleiche Dicke aufzuweisen. Wenn Abweichungen bestehen, müssen allerdings die Aufnahmenuten in den beiden Lagerschenkeln des Halters unterschiedliche Weiten aufweisen und der Ausbildung der Befestigungsstege entsprechend angepasst sein, ebenso in der Höhenposition, damit eine parallele Ausrichtung des Bodens der Tragschiene gegenüber dem Basisträger des Halters möglich ist. Wenn die Ausbildungen jedoch gleich sind, so kann ein Halter sowohl aus einer Richtung als auch von einer anderen Richtung her auf die Unterseite der Tragschiene aufgesetzt und gedreht werden. Wenn darüber hinaus zwei Befestigungsstege übereinander angeordnet sind, und zwar im Rastermaß der korrespondierenden Aufnahmenuten, so ist hierüber eine bessere Lagesicherung gegeben als wenn nur jeweils ein Befestigungssteg seitlich angebracht ist.

Selbst wenn die Befestigungsstege unter Spiel in die Aufnahmenuten eingreifen, kann dafür Sorge getragen werden, dass die Halter durch unbeabsichtigtes Drehen oder Öffnen nicht abfallen können. Hierzu sieht die weitere Ausgestaltung der Erfindung vor, dass an mindestens einer Zwischenrippe der Aufnahmenuten mindestens einseitig eine Rastausnehmung oder ein Rastvorsprung vorgesehen ist, in die ein korrespondierender Rastansatz bzw. eine Rastausnehmung an mindestens einem Befestigungssteg im eingeschwenkten oder aufgeschobenen Zustand der Befestigungsstege, so dass eine Verdreh- oder Abzugssicherung gegeben ist. Auf einfachste Weise können beispielsweise auch an den Rippen zwischen den Aufnahmenuten Längsverdickungen vorgesehen sein und die Befestigungsstege einen kleinen Wulst außenseitig aufweisen, der beim Eindrehen oder Aufschieben auf die Befestigungsstege unter die wulstförmigen Verdickungen greift. Die Elastizität der Rippen, die relativ dünnrandig sind, beispielsweise nur ein bis zwei Millimeter, gewährleistet auch dann, wenn der Halter aus Aluminium besteht, ein Einrasten in den unterschiedlichen Höhenlagen.

Der Halter selbst kann aus Aluminium, Edelstahl oder aus Kunststoff bzw. einem Kunststoff-Metallverbundteil oder aus armierten Kunststoff bestehen. Ebenso kann die Tragschiene aus verschiedenen Materialien bestehen, vorzugsweise wird aber auch hier ein Aluminiumprofil gewählt, das in der Herstellung als Strangprofil in unterschiedlichsten Längen, die für die Montage benötigt werden, ablängbar ist. Selbstverständlich können auch an den Haltern, insbesondere an den außenstehenden Laschen des Halters oder auch an den Außenseiten der Lagerschenkel Rastmittel oder andere Fixiermittel angeformt sein, beispielsweise Rastnasen, die in Bohrungen des Trapezbleches verrastend eindrückbar sind. Der sicherste Halt ist jedoch durch Schrauben oder Blindnieten oder andere Nieten gewährleistet.

Es ist ersichtlich, dass die Halter, wenn diese beispielsweise in Abständen von ca. 40 cm an einer Halteschiene vorgesehen sind und die Tragschiene, die z. B. eine Länge von 2 bis 10 Metern aufweisen kann oder länger ist, sich ausdehnen können. Wenn darüber hinaus ein Gleitsitz zwischen den Befestigungsstegen und den Aufnahmenuten besteht, können sich bei einer horizontalen Anordnung auf einem Dach aus Trapezblech die Tragschienen ebenfalls verschieben. Hier sieht die Erfindung in weiterer Ausgestaltung vor, dass dies auf einfache Weise dadurch vermieden werden kann, wenn oberhalb eines Halters in den Boden der Tragschiene eine Bohrung eingebracht wird, in die beispielsweise eine selbstschneidende Sicherungsschraube einschraubbar ist, die mit ihrer untenseitigen Spitze in die Oberfläche des Basisträgers des Halters eingreift, wodurch eine Lagesicherung gegeben ist. Anstelle einer solchen Schraube kann auch, wenn eine Gewindebohrung eingebracht ist, beispielsweise eine Feststellschraube eingeschraubt werden, die gegen die Oberfläche des Basisträgers des Halters drückt. Ferner kann an dem Basisträger auch eine Ausnehmung eingebracht sein, in die eine Formfeder eingelegt ist, die unter den Boden der Tragschiene drückt oder in eine Ausnehmung hierin rastend eingreift. Die Federkraft sollte so hoch sein, dass ein Verschieben der Tragschiene nur unter höherer Kraftaufwendung möglich ist.

Zur seitlichen Lagefixierung kann aber auch am Boden der Aufnahmenuten ein keilförmig vorstehendes Arretierungsglied vorgesehen sein, praktisch eine kleine keilförmige Anformung, die sich beim Aufdrehen des Halters in die Stirnfläche der Befestigungsstege geringfügig eingräbt. Da dieser Ansatz z. B. 0,2 mm vorsieht und eine Kerbe von nur 0,1 mm, ist ersichtlich, dass ein solcher Eingriff eine thermische Ausdehnung nicht behindert, gegebenenfalls kann die Kerbe auch zu einem Materialabtrag über die Ausdehnungsstrecke führen, wodurch dennoch sichergestellt ist, dass in beiden Endpositionen eine Verschiebesicherung der Tragschiene gegeben ist.

Die Tragschiene kann beispielsweise ein C-Profil sein, so dass Photovoltaikmodule hieran befestigbar sind, beispielsweise mit Befestigungseinrichtungen montiert werden können, wie sie beispielsweise in der DE 20 2009 004 746 U1 bzw. in der DE 20 2010 000 545 U1 beschrieben sind. Eine Befestigung eines solchen Photovoltaikmoduls ist aber auch mittels eines in das C-Profil einschiebbaren Nutensteins möglich, in den eine Schraube eingeschraubt wird, die zuvor in eine Klemmbrücke eingesetzt ist.

Tragschienen, die mittels Halter der Befestigungsvorrichtung nach der Erfindung montiert werden, können für verschiedene Zwecke eingesetzt werden. Die Halter können darüber hinaus an Flächen montiert werden, beispielsweise auf geschlossenen Blechdächern oder an Dächern, die Blechprofile aufweisen, die nicht mit dem Trapezprofilen vergleichbar sind. Die Halter sind auch in Verbindung mit Gardinenleisten einsetzbar, gleich ob diese Gardinenleiste ein C-Profil oder mehrere C-Profile aufweist. Es muss in diesen Fällen nur dafür Sorge getragen werden, dass der Abstand der Lagerschenkeln mit den Nuten sowohl in Längsrichtung der Tragschiene als auch der Seitenabstand entsprechend ausgewählt werden. Ebenso können anstelle einer Bohrung in den seitlichen Laschen auch mehrere Bohrungen zur Befestigung vorgesehen sein. An solchen Tragschienen, die auf Dächern montiert werden, können selbstverständlich Photovoltaikmodule bzw. Modulsysteme montiert werden wie sie beispielsweise aus den vorgenannten Gebrauchsmusterschriften bekannt sind, ferner aus der DE 101 06 309 C2, der DE 195 02 225 A1, der DE 198 02 997 A1, der EP 1 826 507 A2, der WO 03/098126 A1 und der WO 2009/091238 A1 bekannt sind. Auch können Solarmodule, die Kollektoren zur Erwärmung einer Durchlaufflüssigkeit aufweisen, auf Dächern mit der erfindungsgemäßen Vorrichtung montiert werden, um so beispielsweise Brauchwasser oder Heizungswasser zu erwärmen. Die Solarmodule, einschließlich der mit Photovoltaikzellen, weisen in der Regel eine Rahmenstruktur auf und werden auf die vormontierten Tragschienen aufgelegt und daran mit den entsprechenden Befestigungsmitteln fixiert.

Auch Modelle ohne Rahmen können auf diese Art und Weise modifiziert werden.

Die Erfindung wird nachfolgend anhand der in den Zeichnungen dargestellten Ausführungsbeispiele ergänzend erläutert.

In den Zeichnungen zeigen:
- Fig. 1: in einer perspektivischen Darstellung einen Halter der Befestigungsvorrichtung nach der Erfindung,
- Fig. 2: den in Fig. 1 dargestellten Halter in der Seitenansicht mit eingesetzter Tragschiene,
- Fig. 3: in einer perspektivischen Darstellung den ersten Montageschritt an der Tragschiene,
- Fig. 4: den an der Tragschiene montierten Halter in einer perspektivischen Darstellung,
- Fig. 5: ein weiteres Beispiel einer Befestigungsvorrichtung nach der Erfindung, bei dem der Halter aus einem stationär am Basiselement befestigten Lagerschenkel und einem dem gegenüber relativ verschiebbaren oder versetzbaren Lagerschenkel besteht, in isometrischer Darstellung,
- Fig. 6: den in Fig. 5 dargestellten Halter in Seitenansicht im aufgesetzten Zustand auf die Tragschiene,
- Fig. 7: den Halter nach Fig. 5 und 6 in isometrischer Darstellung, mit einem relativ verschobenen Konter-Lagerschenkel und
- Fig. 8: das in Fig. 7 dargestellte Beispiel in der Seitenansicht.

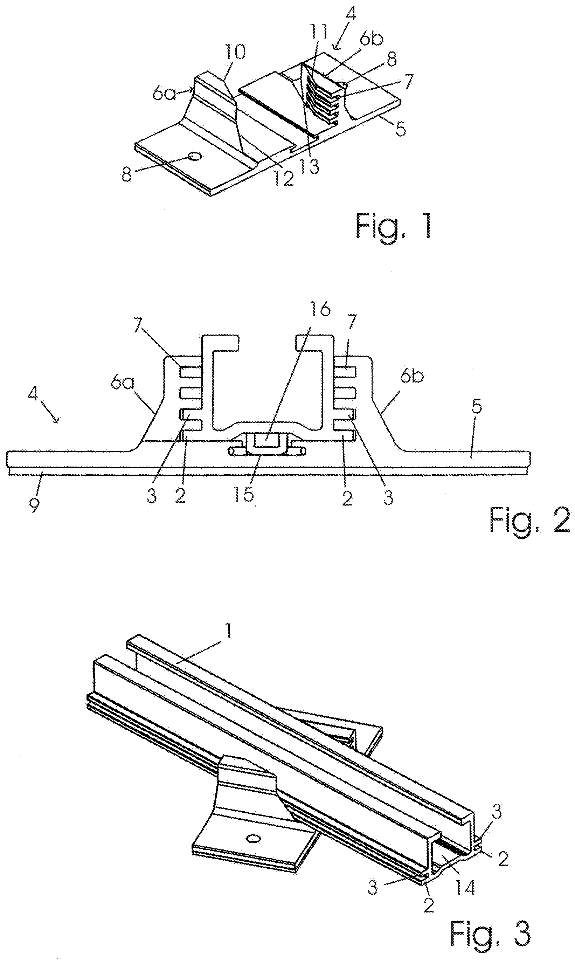

In den Figuren 1 bis 4 ist ein erstes Ausführungsbeispiel eines Halters 4 dargestellt, der aus einem Basisträger 5, der z. B. aus Kunststoff, Edelstahl oder Aluminium gefertigt ist und ein definiertes Profil aufweist, besteht. Dieser Basisträger 5 weist nach oben stehende, eine U-förmige Aufnahme bildende, Lagerschenkel 6a, 6b auf. In diese Lagerschenkel 6a, 6b, die aus einem ersten Abschnitt jeweils bestehen, der an der Seitenkante des Basisträgers 5 beginnend angeformt ist und an der Innenkante 11 endet, weist Aufnahmenuten 7 auf, und zwar vier übereinander liegende Aufnahmenuten 7. Der gegenüberliegend dem Lagerschenkel 6b angeordnete Lagerschenkel 6a ist in Längsrichtung der einsetzbaren Tragschiene 1 versetzt an der anderen Seite des Basisträgers 5 vorgesehen und weist ebenfalls nach innen offene Nuten auf. Ab der Innenkante 10, 11 der beiden Lagerschenkel 6a, 6b weisen diese einen schrägen Freischnitt auf, wodurch ein schräg verlaufender Kanal gegeben ist, dessen Breite der Breite der Tragschiene 1 mit den seitlich vorstehenden, im unteren Bereich angebrachten Befestigungsstegen 2, 3 entspricht.

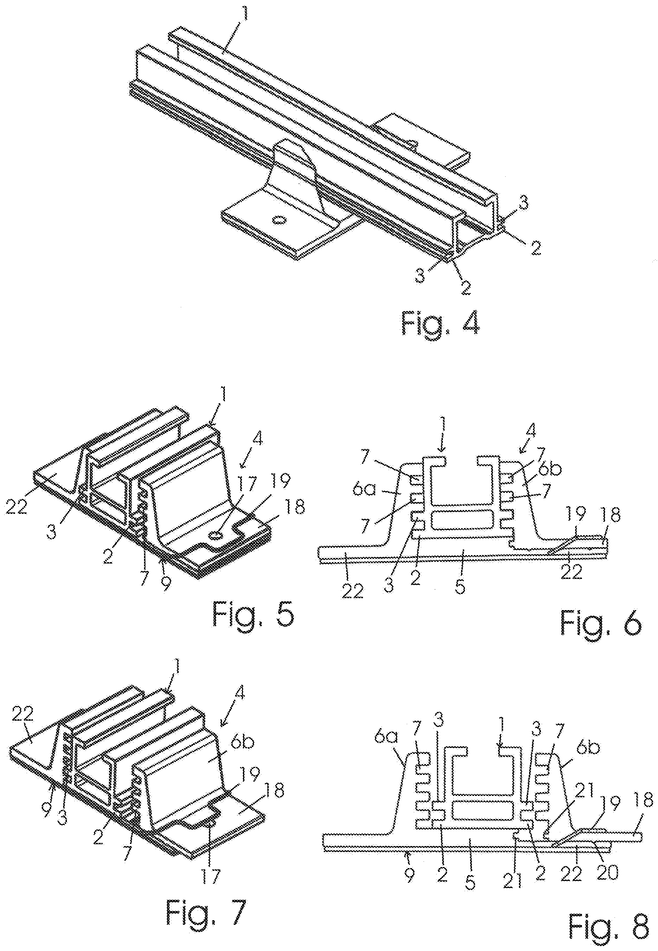

Aus Fig. 3 ist ersichtlich, dass der Halter 4 von unten in der Schrägposition auf die Tragschiene 1 aufgesetzt werden kann. Im Aufgesetzten Zustand kann sodann der Halter 4 gedreht werden, bis er in die senkrechte Position zur Längsachse der Tragschiene 1 verschwenkt, was aus Fig. 4 ersichtlich ist. In dieser Position greifen die seitlichen Befestigungsstege 2, 3 in die Nuten 7 der beiden Lagerschenkel 6a, 6b ein und werden darin durch Klemmung oder durch Gleitsitz gehalten. In diesem vormontierten Zustand kann nun über die beiden in den seitlichen Laschen des Basisträgers 5 vorgesehenen Bohrungen 8 die profilierte Tragschiene 1 an einer Fläche befestigt werden, beispielsweise an der Auflagefläche eines Trapezbleches einer Dachkonstruktion.

Aus Fig. 2 ist ferner ersichtlich, dass der Halter 4 zur Höhenanpassung auf den jeweils beidseitig vorgesehenen Befestigungsstegen 2, 3 auch höhenversetzt angebracht werden kann. Dies ist dann gewünscht, wenn beispielsweise die Höhen des Trapezbleches durch Überlappung zweier Trapezbleche oder Unebenheiten des Dachstuhles von den der übrigen Trapeze abweicht. Der Höhenausgleich ist einfach herstellbar, indem beispielsweise der Halter 4 um ein Raster nach unten verstellt wird bzw. die Tragschiene 1 um ein oder zwei Raster der Aufnahmenuten nach oben verstellt wird. In der Figur ist ferner ein C-Profil 15 in dem Basisträger 5 eingezeichnet, in das eine Formfeder 16 eingelegt ist, die den Boden der Tragschiene 1 untergreift und so einer ungewollten Längsverschiebung der Tragschiene 1 entgegenwirkt.

In den Fig. 5 bis 8 ist ein weiteres Beispiel einer erfindungsgemäßen Befestigungsvorrichtung dargestellt. Der Halter 4 besteht ebenfalls aus einem Basisträger 5, der seitliche Laschen 22 aufweist und linksseitig einen nach oben vorstehenden Lagerschenkel 6a, der fest mit dem Basisträger 5 verbunden ist. Diese Elemente können einteilig als Formteil, beispielsweise aus Aluminium oder Kunststoff gefertigt, hergestellt werden. Der Halter 4 weist eine definierte Breite, beispielsweise 2 cm, auf und weist in dem Lagerschenkel Aufnahmenuten 7 auf, die in in Längsrichtung seitlich an der einsetzbaren oder eingesetzten Tragschiene vorgesehenen Befestigungsstegen eingreifen. Die Aufnahmenuten 7 sind parallel zueinander im gleichen Abstand übereinander angeordnet und korrespondieren mit den Aufnahmenuten 7 in einem abnehmbaren und anfügbaren Lagerschenkel 6b. Die Nuten 7 sind jeweils auf gleicher Höhe mit den Nuten in dem stationären Lagerschenkel 6a angeordnet.

Der Lagerschenkel 6b weist einen Halteschenkel 18 auf, der auf der Lasche 22 des Basisträgers 5 aufliegt und hieran mittels einer Bügelfeder 19 verschiebbar gelagert ist. Diese Bügelfeder 19 übergreift den beweglichen Lagerschenkel 6b vollständig und liegt, wie aus den Figuren ersichtlich ist, mit dem Brückenteil auf der Oberfläche des Halteschenkels 18 auf. Die Halterung der freien Enden der Bügelfeder 19 in den seitlichen Bohrungen in den Laschen 22 des Basisträgers 5 sind so ausgebildet, dass die Bügelfeder 19 unter Vorspannung auf die Oberfläche greift, so dass im vormontierten Zustand die Teile des Halters 4 eine Einheit bilden. Fügerasten 20 in Form von wulstförmigen Anformungen an der Unterseite des Halteschenkels 18, die in Ausnehmungen an der Oberseite der Lasche 22 greifen, definieren die lichte Öffnungsweite des Halters 4, damit er, wie aus Fig. 7 und 8 ersichtlich, von unten auf die Tragschiene 1 aufgesetzt werden kann.

Der bewegliche Lagerschenkel 6b wird nach dem Einfügen der Befestigungsstege 2, 3 in die Aufnahmenuten 7 in der gewünschten Höhenlage durch seitlichen Druck mit den Nuten 7 auf die Befestigungsstege 2, 3 aufgedrückt, dabei wird die Fügeraste 20 in die Raststellung verbracht, in der, wie aus Fig. 5 und 6 ersichtlich, die Tragschiene 1 mit den Befestigungsstegen 2, 3 in den Aufnahmenuten 7 vollends gehalten ist. Eine Fügeverbindung 21 aus einer Feder und einer Nut sichert den Verbund auch ohne Einbringung einer Befestigungsschraube oder einer Niete in die Bohrung 17 in dem Halteschenkel 18, die in der geschlossenen Stellung des Halters 4 gemäß Fig. 5 und 6 kongruent zu einer Bohrung in der Lasche 22 des Basisträgers 5 gelangt, so dass beide Teile hierüber z. B. mittels Blindniete an einem Trapezdach befestigbar sind.

### Bezugszeichenliste

- 1: Tragschiene
- 2: Befestigungssteg
- 3: Befestigungssteg
- 4: Halter
- 5: Basisträger
- 6a: Lagerschenkel
- 6b: Lagerschenkel
- 7: Aufnahmenuten
- 8: Bohrung
- 9: Klebeband
- 10: Innenkante
- 11: Innenkante
- 12: Freischnitt
- 13: Freischnitt
- 14: Bodenwand
- 15: C-Profil
- 16: Formfeder
- 17: Bohrung
- 18: Halteschenkel
- 19: Bügelfeder
- 20: Fügeraste
- 21: Fügeverbindung
- 22: Lasche

## Patentansprüche

1. Befestigungsvorrichtung, umfassend eine Tragschiene (1) und U-förmige Halter (4), wobei die Tragschiene (1) beidseitig zumindest bereichsweise nach außen vorstehende Befestigungsstege (2, 3) zum Befestigen der Tragschiene (1) an den U-förmigen Haltern (4) aufweist, wobei die U-förmigen Halter (4) jeweils einen Basisträger (5) mit zwei aus der Ebene des Basisträgers (5) vorstehenden seitlichen Lagerschenkeln (6a, 6b) mit Innenkanten (10, 11) aufweisen, wobei die Lagerschenkel (6a, 6b) Aufnahmenuten (7) aufweisen, in die die Befestigungsstege (2, 3) eingreifen, welcher Basisträger (5) Bohrungen (8) zur Schraub- und/oder Nietbefestigung des U-förmigen Halters (4) an Befestigungsflächen und/oder andere Fixiermittel hierfür aufweist, **dadurch gekennzeichnet, dass** mehrere Aufnahmenuten (7) übereinander in beiden Lagerschenkeln (6a, 6b) parallel verlaufend angeordnet sind und dass der relative Abstand der Aufnahmenuten (7) in beiden Lagerschenkeln (6a, 6b) gleich ist und die Höhe der Aufnahmenuten (7) der Dicke der Befestigungsstege (2, 3) entspricht, dass die Lagerschenkel (6a, 6b) in Reihe hintereinander in Längsrichtung der einsetztbaren Tragschiene versetzt an dem Basisträger (5) des U-förmigen Halters (4) vorgesehen sind, dass der Abstand zwischen den beiden benachbarten Innenkanten (10, 11) der Lagerschenkel (6a, 6b) so groß gewählt ist oder dass die Lagerschenkel (6a, 6b) derart schräg und parallel zueinander verlaufende Freischnitte (12, 13) aufweisen, dass bei Schrägstellung des Halters (4) gegenüber der Tragschienenlängsachse um eine vertikale Achse die Tragschiene (1) in den Zwischenraum zwischen den beiden Lagerschenkeln (6a, 6b) einführbar ist und durch entgegengesetzte Drehung die seitlichen Befestigungsstege (2, 3) in die Aufnahmenuten (7) einschwenkbar sind.

2. Befestigungsvorrichtung, umfassend eine Tragschiene (1) und U-förmige Halter (4), wobei die Tragschiene (1) beidseitig zumindest bereichsweise nach außen vorstehende Befestigungsstege (2, 3) zum Befestigen der Tragschiene (1) an den U-förmigen Haltern (4) aufweist, wobei die U-förmigen Halter (4) jeweils einen Basisträger (5) mit zwei aus der Ebene des Basisträgers (5) vorstehenden seitlichen Lagerschenkeln (6a, 6b) aufweisen, wobei die Lagerschenkel (6a, 6b) Aufnahmenuten (7) aufweisen, in die die Befestigungsstege (2, 3) eingreifen, welcher Basisträger (5) Bohrungen (8) zur Schraub- und/oder Nietbefestigung des U-förmigen Halters (4) an Befestigungsflächen und/oder andere Fixiermittel hierfür aufweist, **dadurch gekennzeichnet, dass** mehrere Aufnahmenuten (7) übereinander in beiden Lagerschenkeln (6a, 6b) parallel verlaufend angeordnet sind und dass der relative Abstand der Aufnahmenuten (7) in beiden Lagerschenkeln (6a, 6b) gleich ist und die Höhe der Aufnahmenuten (7) der Dicke der Befestigungsstege (2, 3) entspricht, dass ein Lagerschenkel (6a, 6b) am Basisträger (5) gegenüber dem anderen Lagerschenkel (6a, 6b) relativ verschieb-, abnehm- oder versetzbar angeordnet ist und dass nach dem Einsetzen der seitlichen Befestigungsstege (2, 3) an der einen Seite der Tragschiene (1) in die Aufnahmenuten (7) in dem stationär am Basisträger (5) befestigten Lagerschenkel (6a) in einer definierten Höhenlage der relativ verschieb-, abnehm- oder versetzbar angeordnete Lagerschenkel (6b) mit seinen Aufnahmenuten (7) in gleicher Höhenposition auf die an der anderen Seite der Tragschiene (1) vorhandenen seitlichen Befestigungsstege (2, 3) aufsetzbar und an dem Basisträger (5) fixierbar ist.

3. Vorrichtung nach Anspruch 1 oder 2, **dadurch gekennzeichnet, dass** an der Tragschiene (1) mindestens jeweils zwei Befestigungsstege (2, 3) übereinander im Rastermass der korrespondierenden Aufnahmenuten (7) angeordnet sind.

4. Vorrichtung nach einem der vorhergehenden Ansprüche, **dadurch gekennzeichnet, dass** an mindestens einer Zwischenrippe der Aufnahmenuten (7) mindestens einseitig Rastausnehmungen oder Rastvorsprünge vorgesehen sind, die mit korrespondierenden Rastvorsprüngen oder Rastausnehmungen an mindestens einem Befestigungssteg (2, 3) im eingeschwenkten Zustand der Befestigungsstege (2, 3) zusammenwirken.

5. Vorrichtung nach Anspruch 1 oder 2, **dadurch gekennzeichnet, dass** die Bohrungen (8) oder Fixiermittel an Laschen am Basisträger (5) vorgesehen sind, die die Lagerschenkel (6a, 6b) seitlich überstehen.

6. Vorrichtung nach Anspruch 2 und 5, **dadurch gekennzeichnet, dass** kongruent zu der mindestens einen Bohrung (8) in einer Lasche des Basisträgers (5), die den relativ verschieb-, abnehm- oder versetzbar angeordneten Lagerschenkel (6b) aufnimmt, eine Bohrung (17) oder ein Langloch quer zur Längsrichtung der Tragschiene (1) in einen Halteschenkel (18) des Lagerschenkels (6b) eingebracht ist.

7. Vorrichtung nach Anspruch 2, **dadurch gekennzeichnet, dass** an dem relativ verschieb-, abnehm- oder versetzbar angeordneten Lagerschenkel (6b) Führungen vorgesehen sind, die in korrespondierende Führungen am Basisträger (1) eingreifen.

8. Vorrichtung nach Anspruch 2 oder 7, **dadurch gekennzeichnet, dass** am Basisträger (1) eine Bügelfeder (19) gelagert ist, die mindestens über Teile des relativ verschieb-, abnehm- oder versetzbar angeordneten Lagerschenkels (6b), diesen abnehmsicher jedoch verstellbar am Basisträger (1) haltend, mindestens partiell übergreift.

9. Vorrichtung nach Anspruch 1 oder 2, **dadurch gekennzeichnet, dass** mindestens an einer Befestigungsstelle eines Halters (4) an der Tragschiene (1) in der Bodenwand (14) eine Gewindebohrung oder eine Bohrung eingebracht ist, in die eine Sicherungsschraube oder selbstschneidende Sicherungsschraube einschraubbar ist, die auf den Basisträger (5) zur Fixierung drückt oder mit einer Spitze in die Oberfläche eindringt.

10. Vorrichtung nach Anspruch 1, **dadurch gekennzeichnet, dass** im Boden der Aufnahmenuten (7) keilförmig vorstehende Arretierglieder vorgesehen sind, die beim Verdrehen des Halters (4) in die Stirnflächen der Befestigungsstege (2, 3) eindringen.

11. Vorrichtung nach Anspruch 1 oder 2, **dadurch gekennzeichnet, dass** die Passung zwischen den Aufnahmenuten (7) und den Befestigungsstegen (2, 3) ein Gleitsitz und/oder eine Klemmpassung ist.

12. Vorrichtung nach Anspruch 1 oder 2, **dadurch gekennzeichnet, dass** die Tragschiene (1) für die Befestgung eines Solar- oder Photovoltaikmoduls ausgelegt ist und ein C-Profil aufweist.

13. Vorrichtung nach Anspruch 1 oder 2, **dadurch gekennzeichnet, dass** in dem Basisträger (5) obenseitig eine Aufnahme für eine Formfeder (16) vorgesehen ist, die die Unterseite der Tragschiene (1) im eingesetzten Zustand untergreift oder in eine in diese eingebrachte Nut eingreift.

14. Vorrichtung nach Anspruch 1 oder 2, **dadurch gekennzeichnet, dass** der Halter (4) und/oder die Tragschiene (1) aus Kunststoff, Aluminium oder Edelstahl besteht.

## Claims

1. Fixing device comprising a support rail (1) and U-shaped mounts (4), wherein the support rail (1) has fixing webs (2, 3), which protrude outwardly at least regionally, on both sides for fixing the support rail (1) to the U-shaped mounts (4), wherein the U-shaped mounts (4) each comprise a base support (5) with two mounting limbs (6a, 6b), which protrude laterally out of the plane of the base support (5), with inner edges (10, 11), wherein the mounting limbs (6a, 6b) have receiving grooves (7) in which the fixing webs (2, 3) engage, which base support (5) has bores (8) for screw and/or rivet fixing of the U-shaped mount (4) to fixing surfaces and/or other fixing means for that purpose, **characterised in that** several receiving grooves (7) are arranged one above the other in the two mounting limbs (6a, 6b) to extend parallelly and that the relative spacing of the receiving grooves (7) in the two mounting limbs (6a, 6b) is the same and the height of the receiving grooves (7) corresponds with the thickness of the fixing webs (2, 3), that the mounting limbs (6a, 6b) are provided at the base support (5) of the U-shaped mount (4) in a row one behind the other to be offset in the longitudinal direction of the insertable support rail, that the spacing of the two adjacent inner edges (10, 11) of the mounting limbs (6a, 6b) is selected to be of such a size or that the support limbs (6a, 6b) have cut-free sections (12, 13) extending obliquely and parallel to one another in such a way that when the mount (4) is placed obliquely relative to the support rail longitudinal axis about a vertical axis the support rail (1) is insertable into the intermediate space between the two mounting limbs (6a, 6b) and the lateral fixing webs (2, 3) are pivotable into the receiving grooves (7) through rotation in opposite sense.

2. Fixing device comprising a support rail (1) and U-shaped mounts (4), wherein the support rail (1) has fixing webs (2, 3), which protrude outwardly at least regionally, on both sides for fixing the support rail (1) to the U-shaped mounts (4), wherein the U-shaped mounts (4) each comprise a base support (5) with two mounting limbs (6a, 6b), which protrude laterally out of the plane of the base support (5), wherein the mounting limbs (6a, 6b) have receiving grooves (7) in which the fixing webs (2, 3) engage, which base support (5) has bores (8) for screw and/or rivet fixing of the U-shaped mount (4) to fixing surfaces and/or other fixing means for that purpose, **characterised in that** several receiving grooves (7) are arranged one above the other in the two mounting limbs (6a, 6b) to extend parallelly and that the relative spacing of the receiving grooves (7) in the two mounting limbs (6a, 6b) is the same and the height of the receiving grooves (7) corresponds with the thickness of the fixing webs (2, 3), that one mounting limb (6a, 6b) at the base support (5) is arranged to be relatively displaceable, removable or offsettable relative to the other mounting limb (6a, 6b) and that after insertion of the lateral fixing webs (2, 3) at one side of the support rail (1) into the receiving grooves (7) in the mounting limb (6a), which is fixed in stationary position to the base support (5), at a defined height position the mounting limb (6b) arranged to be relative displaceable, removable or offsettable can be placed by its receiving grooves (7) at the same height position on the lateral fixing webs (2, 3) present at the other side of the support rail (1) and is fixable to the base support (5).

3. Device according to claim 1 or 2, **characterised in that** in each instance at least two fixing webs (2, 3) are arranged at the support rail (1) one above the other at the pitch dimension of the corresponding receiving grooves (7).

4. Device according to any one of the preceding claims, **characterised in that** detent recesses or detent projections, which co-operate with corresponding detent projections or detent recesses at at least one fixing web (2, 3) in the pivoted-in state of the fastening webs (2, 3), are provided at at least one intermediate rib of the receiving grooves (7) on at least one side.

5. Device according to claim 1 or 2, **characterised in that** the bores (8) or fixing means are provided at straps, which laterally project beyond the mounting limbs (6a, 6b), at the base support (5).

6. Device according to claim 2 and 5, **characterised in that** formed congruently to the at least one bore (8) in a strap of the base support (5) receiving the mounting limb (6b) arranged to be relatively displaceable, removable or offsettable is a bore (17) or a slot transverse to the longitudinal direction of the support rail (1) in a holding limb (18) of the mounting limb (6b).

7. Device according to claim 2, **characterised in that** guides engaging in corresponding guides of the base support (1) are provided at the mounting limbs (6b) which are relatively displaceable, removable or offsettable.

8. Device according to claim 2 or 7, **characterised in that** a stirrup spring (19) is mounted on the base support (1) to engage at least partially over parts of the mounting limb (6b), which is arranged to be relatively displaceable, removable or offsettable, so as to retain this at the base support (1) to be secure against removal, but adjustable.

9. Device according to claim 1 or 2, **characterised in that** a threaded bore or a bore is formed at least at one fixing point of a mount (4) at the support rail (1) in the base wall (14), into which threaded bore or bore a securing screw or self-tapping securing screw can be screwed and presses on the base support (5) for fixing or penetrates by a point into the surface.

10. Device according to claim 1, **characterised in that** locking-elements which project in wedge-shape are provided in the base of the receiving grooves (11) and on rotation of the mount (4) penetrate into the end surfaces of the fastening webs (2, 3).

11. Device according to claim 1 or 2, **characterised in that** the fit between the receiving grooves (7) and the fixing webs (2, 3) is a sliding seat and/or a clamping fit.

12. Device according to claim 1 or 2, **characterised in that** the support rail (1) is designed for fixing a solar or photovoltaic module and has a C-profile.

13. Device according to claim 1 or 2, **characterised in that** provided in the base support (5) at the upper side is a receptacle for a shaped spring (16) which engages under the underside of the support rail (1) in the inserted state or engages in a groove formed therein.

14. Device according to claim 1 or 2, **characterised in that** the mount (4) and/or the support rail (1) consists or consist of plastics material, aluminium or stainless steel.

## Revendications

1. Dispositif de fixation, comprenant un rail porteur (1) et des appuis (4) en forme de U, le rail porteur (1) présentant des entretoises de fixation (2, 3) faisant bilatéralement saillie vers l'extérieur au moins partiellement, pour la fixation du rail porteur (1) sur les appuis (4) en forme de U, les appuis (4) en forme de U présentant chacun un support de base (5) comprenant deux branches de support (6a, 6b) latérales qui font saillie du plan du support de base (5) et qui étant pourvues de bords intérieurs (10, 11), les branches de support (6a, 6b) comprenant des rainures de réception (7) dans lesquelles s'insèrent les entretoises de fixation (2, 3), ledit support de base (5) présentant des trous (8) pour la fixation par vissage et/ou rivetage de l'appui (4) en forme de U sur des surfaces de fixation et/ou d'autres moyens de fixation appropriés, **caractérisé en ce que** plusieurs rainures de réception (7) sont superposées dans les deux branches de support (6a, 6b) de manière à s'étendre parallèlement et **en ce que** l'écart relatif entre les rainures de réception (7) dans les deux branches de support (6a, 6b) est identique et la hauteur des rainures de réception (7) correspond à l'épaisseur des entretoises de fixation (2, 3), **en ce que** les branches de support (6a, 6b) sont situées en rangée les unes derrière les autres dans la direction longitudinale du rail porteur insérable, de façon décalée, sur le support de base (5) de l'appui (4) en forme de U, **en ce que** l'écart entre les deux bords intérieurs (10, 11) voisins des branches de support (6a, 6b) est assez grand ou **en ce que** les branches de support (6a, 6b) présentent des dégagements (12, 13) s'étendant de manière inclinée et parallèle les uns aux autres pour que, lorsque l'appui (4) est en position inclinée par rapport à l'axe longitudinal du rail porteur autour d'un axe vertical, le rail porteur (1) puisse être introduit dans l'espace intermédiaire entre les deux branches de support (6a, 6b) et que les entretoises de fixation (2, 3) latérales puissent pivoter à l'intérieur des rainures de réception (7) à la suite d'une rotation opposée.

2. Dispositif de fixation, comprenant un rail porteur (1) et des appuis (4) en forme de U, le rail porteur (1) présentant des entretoises de fixation (2, 3) faisant bilatéralement saillie vers l'extérieur au moins partiellement, pour la fixation du rail porteur (1) sur les appuis (4) en forme de U, les appuis (4) en forme de U présentant chacun un support de base (5) comprenant deux branches de support (6a, 6b) latérales faisant saillie du plan du support de base (5), les branches de support (6a, 6b) comprenant des rainures de réception (7) dans lesquelles s'insérant les entretoises de fixation (2, 3), lequel support de base (5) présentant des trous (8) pour la fixation par vissage et/ou rivetage de l'appui (4) en forme de U sur des surfaces de fixation et/ou d'autres moyens de fixation appropriés, **caractérisé en ce que** plusieurs rainures de réception (7) sont superposées dans les deux branches de support (6a, 6b) de manière à s'étendre parallèlement et **en ce que** l'écart relatif entre les rainures de réception (7) dans les deux branches de support (6a, 6b) est identique et la hauteur des rainures de réception (7) correspond à l'épaisseur des entretoises de fixation (2, 3), **en ce qu'**une branche de support (6a, 6b) est agencée sur le support de base (5) de manière à pouvoir être relativement déplacée, retirée ou décalée par rapport à l'autre branche de support (6a, 6b), et **en ce que**, une fois les entretoises de fixation latérales (2, 3) insérées sur l'une des faces du rail porteur (1) dans les rainures de réception (7), dans la branche de support (6a) fixée sans pouvoir bouger sur le support de base (5), dans une position en hauteur définie, la branche de support (6b) agencée de manière à pouvoir être relativement déplacée, retirée ou décalée peut être posée avec ses rainures de réception (7) dans la même position en hauteur sur les entretoises de fixation (2, 3) latérales présentes sur l'autre face du rail porteur (1), et peut être fixée sur le support de base (5).

3. Dispositif selon la revendication 1 ou 2, **caractérisé en ce qu'**au moins respectivement deux entretoises de fixation (2, 3) sont superposées dans la dimension modulaire des rainures de réception (7) correspondantes sur le rail porteur (1).

4. Dispositif selon l'une quelconque des revendications précédentes, **caractérisé en ce que** des évidements d'encliquetage ou des parties saillantes d'encliquetage sont situé(e)s sur au moins une nervure intermédiaire des rainures de réception (7) au moins unilatéralement, et coopèrent avec des parties saillantes d'encliquetage correspondantes ou des évidements d'encliquetage correspondants sur au moins une entretoise de fixation (2, 3), une fois les entretoises de fixation (2, 3) entrées par pivotement.

5. Dispositif selon la revendication 1 ou 2, **caractérisé en ce que** les trous (8) ou des moyens de fixation sont situés sur le support de base (5) sur des languettes qui font saillie latéralement des branches de support (6a, 6b).

6. Dispositif selon les revendications 2 et 5, **caractérisé en ce que**, de manière identique au ou aux trous (8) dans une languette du support de base (5), qui reçoit la branche de support (6b) agencée de manière à pouvoir être relativement déplacée, retirée ou décalée, un trou (17) ou un trou oblong est ménagé transversalement à la direction longitudinale du rail porteur (1) dans une branche de retenue (18) de la branche de support (6b).

7. Dispositif selon la revendication 2, **caractérisé en ce que** des guidages s'insérant dans des guidages correspondants sur le support de base (1) sont situés sur la branche de support (6b) agencée de manière à pouvoir être relativement déplacée, retirée ou décalée.

8. Dispositif selon la revendication 2 ou 7, **caractérisé en ce que** sur le support de base (1) est monté un ressort en étrier (19) qui vient au moins partiellement se plaquer au-dessus au moins de parties de la branche de support (6b) agencée de manière à pouvoir être relativement déplacée, retirée ou décalée, en retenant celle-ci sur le support de base (1) de manière ajustable.

9. Dispositif selon la revendication 1 ou 2, **caractérisé en ce qu'**un trou fileté ou un trou dans lequel une vis de blocage ou une vis de blocage autotaraudeuse peut être vissée, laquelle exerce une pression sur le support de base (5) en vue de la fixation ou s'enfonce par sa pointe dans la surface, est ménagé au moins en un point de fixation d'un appui (4) sur le rail porteur (1) dans la paroi de fond (14).

10. Dispositif selon la revendication 1, **caractérisé en ce que** des éléments d'arrêt faisant saillie en forme de coin, qui pénètrent dans les surfaces avant des entretoises de fixation (2, 3) lorsque l'appui (4) est amené en rotation, sont situés dans le fond des rainures de réception (7).

11. Dispositif selon la revendication 1 ou 2, **caractérisé en ce que** l'ajustement entre les rainures de réception (7) et les entretoises de fixation (2, 3) est un ajustement glissant et/ou un ajustement de serrage.

12. Dispositif selon la revendication 1 ou 2, **caractérisé en ce que** le rail porteur (1) est conçu pour la fixation d'un module solaire ou photovoltaïque et présente un profilé en C.

13. Dispositif selon la revendication 1 ou 2, **caractérisé en ce qu'**un logement pour un ressort de retenu (16), qui vient se plaquer sous la face inférieure du rail porteur (1) dans l'état inséré ou s'insère dans une rainure ménagée dans celui-ci, est situé côté supérieur dans le support de base (5).

14. Dispositif selon la revendication 1 ou 2, **caractérisé en ce que** l'appui (4) et/ou le rail porteur (1) sont constitués de matière plastique, d'aluminium ou d'acier inoxydable.
